# EUROPEAN PATENT SPECIFICATION

(11) **EP 2 491 268 B1**
(45) Date of publication and mention of the grant of the patent: **19.02.2014**
(21) Application number: 10768932.5
(22) Date of filing: 21.10.2010
(51) Int. Cl.: F16F 9/06, F16F 9/49

(54) **CONTROLLED - ACTIVATION GAS CYLINDER**
GASZYLINDER MIT GESTEUERTER AKTIVIERUNG
CYLINDRE À GAZ À ACTIVATION CONTRÔLLÉE

(30) Priority: 22.10.2009 ES 200930889
(43) Date of publication of application: 29.08.2012
(73) Proprietor: Nitrogas, S.A.U., 01510 Miñano (ES)
(72) Inventor: VALOR VALOR, Antonio, E-20500 Arrasate-Mondragon (ES); DEL TESO DÍEZ, Luis, E-20006 Donostia (ES); HERNANDO GARITAONANDIA, Jon, E-01004 Vitoria-gasteiz (ES)
(74) Representative: Igartua, Ismael
(86) International application number: PCT/EP2010/065853
(87) International publication number: WO 2011/048174

(56) References cited:
- EP-A1- 1 598 124
- WO-A1-2009/043594
- DE-A1- 10 024 499
- DE-U- 1 886 350
- FR-A- 1 504 941
- US-A- 4 323 224

## Description

### TECHNICAL FIELD

This invention relates to gas cylinders, generally used in forming material, with a controlled actuation, so that the movement of a rod of said cylinders to its original position can be controlled without it affecting the piece obtained.

### PRIOR ART

Gas cylinders comprise a cylindrical body and a rod that can move axially inside said body when it receives a force or pressure on it, as can be the case during a material-forming process in which a piece is obtained by means of at least one blow. An upper die or punch, for example, can exert a blow against lower die or mould, beneath which are disposed the gas cylinders, the rod of which moves when said lower die receives the blow imparted by the upper die.

The gas cylinders also comprise a chamber with gas, said gas being compressed when the rod moves as a result of the pressure exerted on it, or said gas being decompressed when said pressure is no longer exerted and the rod returns to its original position. There are known gas cylinders in which when the rod no longer receives a pressure or force on it, the gas in the chamber of the cylinder is decompressed, causing a new movement of the rod in the opposite direction so that it can return to its original position. This can cause serious problems in the piece obtained during the material-forming process, which can be deformed if the rod hits it when it is returning to its original position, for example.

There are also known gas cylinders with a controlled stop, so that the point at which the rod returns to its original position may be controlled, thereby preventing the deformation of the piece by said rod. For example, patent ES 2 216 673 B1 discloses a cylinder of this type. Said gas cylinder comprises two main chambers and a cell with a chamber that is communicated with the two main chambers by means of two pipes, the pressure compensation between the chambers being capable of being adjusted to control the movement of the rod of the cylinder. Each pipe comprises an electrovalve that can be opened and closed in a controlled manner to change the pressures in the chambers, so that by opening or closing said electrovalves the return of the rod of the cylinder to its original position can be permitted or not. When installing said gas cylinder sufficient space must be left in order to dispose the body of the cylinder, the cell, the electrovalves and the pipes, something that is often very difficult and which also makes said installation more complex.

Patent application WO2009043594A1 discloses a gas cylinder that comprises a hollow cylindrical body, a body base fixed to the cylindrical body, a rod inside the cylindrical body, said rod being capable of moving axially from a rest position to a stop position. The cylinder also comprises a main chamber, an auxiliary chamber independent to the main chamber, and a through-pipe to communicate the main chamber with the auxiliary chamber. The through-pipe is disposed inside the rod, the main chamber comprising a gaseous fluid and an oily fluid in its interior when the rod is in the rest position and comprising only oily fluid when said rod is in the stop position. The cylinder also comprises closing means attached to the body base and adapted to close the through-pipe when the rod reaches the stop position, also causing an increase in the volume of the main chamber. The closing means comprise a closure shaft that moves to cause said closure, the rod being kept in its stop position.

Documents EP1598124A1, DE10024499A1 and US4323224A disclose a gas cylinder comprising a main chamber and auxiliary chamber communicated through a passage.

### BRIEF DISCLOSURE OF THE INVENTION

It is the object of the invention to provide a controlled-activation gas cylinder as described in the claims.

The gas cylinder of the invention comprises a hollow cylindrical body, a body base that closes one of the ends of the cylindrical body, housed, at least partially, inside the cylindrical body, which can move axially in relation to said body of the cylinder the cylindrical body, which can move axially in relation to said body of the cylinder from a rest position to a stop position and vice versa, and a stopper disposed on the end of the cylindrical body opposite to that of the body base, which limits the movement of the rod in one direction. Said cylinder also comprises a main chamber inside the cylindrical body, delimited between the rod and the body base, an auxiliary chamber inside said cylindrical body delimited between the stopper and the rod, a communication circuit to communicate the main chamber with the auxiliary chamber through the rod, and closing means attached to the body base and adapted to close the communication circuit when the rod reaches the stop position.

The closing means comprise a closing piece joined without freedom of movement to the body base and disposed, at least partially, in the main chamber, so that when the rod moves to its stop position, said movement causes the closing piece to seal the communication circuit. When the communication circuit is sealed, the communication between the main chamber and the auxiliary chamber is prevented, thereby preventing a movement of the rod towards the rest position, the stopping of the rod thus being controlled automatically without the need for any additional action to be carried out.

These and other advantages and characteristics of the invention will be made evident in the light of the drawings and the detailed description thereof.

### DESCRIPTION OF THE DRAWINGS

Figure 1 shows a cross-sectional view of an embodiment of the cylinder of the invention, with the rod of said cylinder in its rest position.
Figure 2 shows a cross-sectional view of the cylinder of Figure 1, with the rod of said cylinder in its stop position and with a communication circuit closed.
Figure 3 shows a cross-sectional view of the cylinder of Figure 1, with the rod of said cylinder in its stop position and with the communication circuit open.
Figure 4 shows a detailed view of the release means and the closing means of the cylinder of Figure 3.

### DETAILED DISCLOSURE OF THE INVENTION

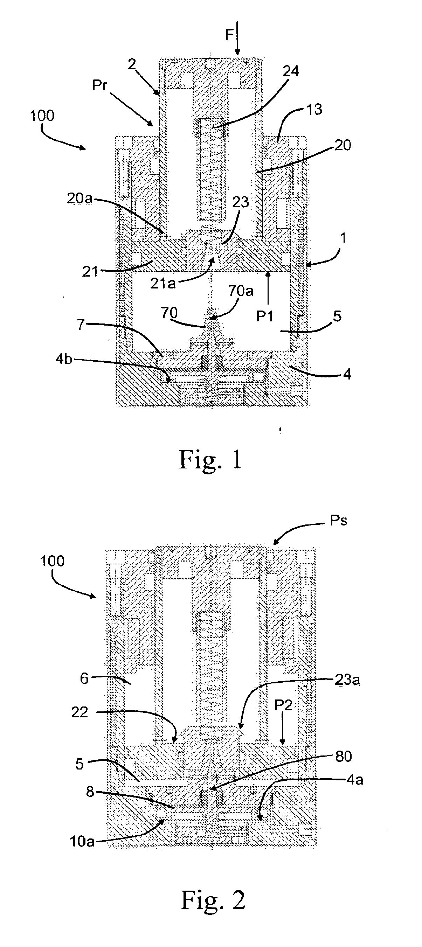

Figures 1 to 3 show an embodiment of the controlled-activation gas cylinder 100 of the invention. The cylinder 100 comprises a hollow cylindrical body 1, a body base 4 that closes one of the ends of the cylindrical body 1 and which can be fixed to said cylindrical body 1 or can form part of the cylindrical body 1 itself, a rod 2 housed, at least partially, inside the cylindrical body 1, which can move axially in relation to said cylindrical body 1 from a rest position Pr shown in Figure 1 to a stop position Ps shown in Figure 2 and vice versa, and a stopper 13 that is disposed on the end of the cylindrical body 1 opposite to that of the body base 4, which can be fixed to said cylindrical body 1 or can form part of the cylindrical body 1 itself, and which limits the movement of the rod 2 when it moves from the stop position Ps to the rest position Pr.

The cylinder 100 also comprises a main chamber 5 inside the cylindrical body 1, delimited between the rod 2 and the body base 4, an auxiliary chamber 6 delimited between the stopper 13 and the rod 2, a communication circuit that communicates the main chamber 5 with the auxiliary chamber 6 through the rod 2, and closing means that are attached to the body base 4 and which are adapted to seal the communication circuit when the rod 2 reaches the stop position Ps. The closing means comprise a closing piece 7 that is joined without freedom of movement to the body base 4 and which is disposed, at least partially, in the main chamber 5. When the rod 2 moves towards its stop position Ps, said movement causes the closing piece 7 to seal the communication circuit, causing said rod 2 to stop in a controlled manner, said rod 2 also being kept in said stop position Ps automatically. Prior to this, the communication between the movement of the rod 2 and the arrangement of the closing piece 7 is established, with the result that both the arrangement of said closing piece 7 and the movement of said rod 2 are analysed beforehand so that the sealing of the communication circuit coincides with the position of said rod 2, which corresponds with the stop position Ps.

The main chamber 5 comprises a gaseous fluid and an oily fluid (preferably oil) in its interior when the rod 2 is in the rest position Pr, which exerts a pressure P1 on said rod 2 to keep it in said rest position Pr, as shown in Figure 1. When the rod 2 is in the stop position Ps, shown for example in Figure 2, the gaseous fluid present in the main chamber 5 when said rod 2 is in the rest position Pr moves to the auxiliary chamber 6, leaving only the oily fluid in said main chamber 5 (or part of said oily fluid). In said stop position Ps, due to the compression properties of the oily fluid and the gaseous fluid (the oily fluid is compressed less than the gaseous fluid, exerting less pressure), the fluid of the auxiliary chamber 6 (the gaseous fluid) exerts a pressure P2 on the rod 2 that is greater than the pressure P1 exerted by the fluid of the main chamber 5 (oily fluid), and as the communication circuit is sealed by the closing means, said rod 2 remains in the stop position Ps, thereby preventing the movement of the rod 2 towards the rest position Pr, without the need to use additional cylinders or cells, thus making the installation of the cylinder 100 easier and reducing its cost. The cylinder 100 can also comprise a hollow support piece 23 disposed inside the rod 2 with freedom of axial movement in relation to said rod 2. Preferably, the support piece 23 is substantially cylindrical, as is the space of the cylindrical body 1, and comprises a projection 23a that is supported on an internal surface 22 of the rod 2. Said support piece 23 also comprises at least part of the communication circuit, and when the closing means seal the communication circuit, said support piece 23 moves axially in the direction opposite to the direction of the rod 2 when it moves towards the stop position Ps, by means of said closing means. The movement of the support piece 23 results in the free movement of the rod 2 when it reaches the stop position Ps, thereby enabling the adaptation of the connection between the movement of the rod 2 and the arrangement of the closing piece 7 in order to cause the controlled stop. The cylinder 100 also comprises a rod spring 24 fixed at one end to the support piece 23 and at the other to the opposite end of the rod 2, so that said rod spring 24 forces said support piece 23 to return to its original position when the closing means stop sealing the communication circuit.

The rod 2 comprises a rod body 20 and a rod base 21, and the main chamber 5 is delimited between the rod base 21 and the body base 4. The communication circuit comprises a first through-pipe 21 a that passes through the rod base 21 to communicate the main chamber 5 with the rod body 20, and at least one second through-pipe 20a that communicates the first through-pipe 21 a with the auxiliary chamber 6. Preferably, the first through-pipe 21 a extends axially to the rod body 20, while the second through-pipe 20a does so transversally, although as well as being axial and transversal they can also be oblique, for example. Said first pipe 21 a is also comprised in the support piece 23.

The closing means are adapted to close the communication circuit when the rod 2 reaches the stop position Ps, closing off the communication between the chambers 5 and 6. The closing piece 7 comprises an extended part 70 disposed in the main chamber 5, which seals the communication circuit. To aid the sealing said extended part 70 preferably comprises a substantially conical shape, while the communication circuit comprises a substantially conical area to house said extended part 70. Said communication circuit comprises said conical area in the first through-pipe 21 a, said first through-pipe 21 a being the one that is sealed when the communication circuit is sealed. The extended part 70 is disposed in the main chamber 5 without freedom of movement, so that when the rod 2 moves towards its stop position Ps the closing piece 7 seals the communication circuit without any need to cause the movement of the closing piece 7 or any other action, the closure taking place automatically with the movement of the rod 2. The body base 4 and the closing piece 7 can form a single piece or they can be two different pieces. In the latter case the body base 4 comprises at least one support 40a, 40b where the closing piece 7 is supported or fixed, it remaining supported or fixed on said support 40a, 40b at all times. To provide the support or the fixing with greater strength, said body base 4 can comprise two supports 40a and 40b or even more.

The closing means also comprise an additional closing piece 8 that ensures the correct sealing of the communication circuit when the rod 2 reaches the stop position Ps, as well as enabling the opening of said circuit when required so that said rod 2 may return to its rest position Pr. As a result, the circuit is closed automatically, while said communication circuit can be opened once more when required. The extended part 70 comprises a pipe 70a in its interior and is communicated with the communication circuit and the main chamber 5 when the rod 2 is in the stop position Ps and communicated only with said main chamber 5 when said rod 2 is not in said stop position Ps, and the additional closing piece 8 comprises an extended part 80 that is housed in said pipe 70a, sealing it, so that when the rod 2 reaches its stop position Ps the communication circuit is sealed (the first through-pipe 21 a is sealed). The cylinder 100 preferably comprises at least one spring 9 fixed to the additional closing piece 8 at one end and to the body base 4 at the other end to keep the extended part 80 housed in the pipe 70a, although said function can also be performed by a chamber (not shown in the figures) of compressed air. To enable said rod 2 to return to its rest position Pr, the cylinder 100 comprises release means that can cause the dislodging of said extended part 80 from said pipe 70a, the pipe 70a then being connected to the main chamber 5 and the communication circuit, and therefore to said main chamber 5 and the auxiliary chamber 6, thereby enabling the connection between both chambers 5 and 6 and the movement of the rod 2 to its return position Pr.

The body base 4 comprises a cavity in which the closing pieces 7 and 8 are disposed, the additional closing piece 8 being disposed between the closing piece 7 and a surface 4b of said body base 4. The supports 40a and 40b of the body base 4 are disposed on the side walls delimiting said cavity of said body base 4.

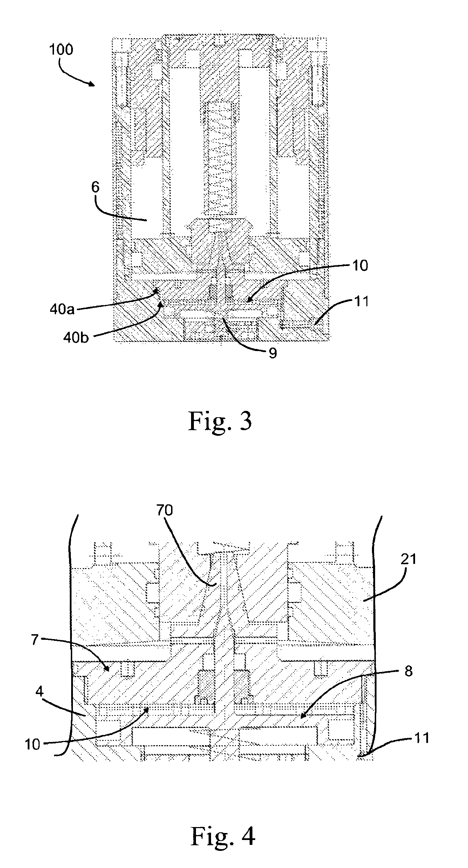

The closing pieces 7 and 8 preferably comprise a substantially inverted, cylindrical T-shape, in other words they comprise substantially horizontal sections, and in the centre of said section they comprise a perpendicular extension that corresponds with the extended parts 70 and 80 respectively. The release means comprise an intermediate chamber 10 shown in Figure 4, between the pieces 7 and 8, between the substantially horizontal sections of said pieces 7 and 8, the horizontal section of the closing piece 7 being larger than that of the additional closing piece 8, thereby enabling the existence of the intermediate chamber 10. In normal conditions said intermediate chamber 10 is empty, and the release means comprise a hole 11 communicated with the intermediate chamber 10, through which a fluid is pressure-injected (preferably air) into said intermediate chamber 10. As the closing piece 7 cannot move in relation to the body base 4, said pressurised fluid pushes the additional closing piece 8 against the force exerted by the spring 9, said additional closing piece 8 thus moving away from the closing piece 7, dislodging the extended part 80 from the pipe 70a, as a shown in Figure 3. When the injecting of pressurised fluid is completed, said fluid drains away through the hole 11, which is preferably formed in the body base 4. In an initial stage the volume of the intermediate chamber 10 is negligible, said volume increasing when the fluid is pressure-injected due to the movement of the additional closing piece 8. To enable said movement, the cylinder 100 comprises a space 10a between a surface 4a of the body base 4 and the additional closing piece 8, a space 10a that corresponds with the path of said additional closing piece 8 when it moves to release the communication circuit. The spring 9 is the member that pushes the additional closing piece 8 towards the closing piece 7, enabling the existence of the space 10a in the absence of pressurised fluid in the intermediate chamber 10.

The following is an explanation of the operating mode: when the rod 2 is in the rest position Pr the communication circuit is open, as shown in Figure 1. If a force F is applied on said rod 2 in the direction of the stop position Ps, greater than the pressure P1 exerted on said rod 2 in the opposite direction by the fluid present in the main chamber 5, said rod 2 moves axially towards said stop position Ps, the volume of the main chamber 5 being reduced and the volume of the auxiliary chamber 6 being increased as a result. As the volumes of the chambers 5 and 6 change, the gaseous fluid of the main chamber 5 moves to the auxiliary chamber 6 through the communication circuit, the pressure P2 exerted by the fluid of said auxiliary chamber 6 increasing as the pressure P1 exerted by the fluid of the main chamber 5 falls. When the rod 2 reaches the stop position Ps the force F is no longer exerted (the duration and amplitude of the force F is established beforehand and the movement of the rod 2 determined so that this point coincides with the stop position Ps) and, assisted by the movement of the support piece 23, the pressure P2 is greater than the pressure P1, so that, as the communication circuit has also closed with the closing piece 7 preventing the communication between the chambers 5 and 6, said rod 2 is kept in said stop position Ps automatically, it being unable to return to its rest position Pr. When it is deemed that said rod 2 has to go to the rest position Pr, the fluid is pressure-injected into the intermediate chamber 10 through the hole 11, causing the axial movement of the additional closing piece 8 in relation to the closing piece 7, thereby releasing the communication circuit and therefore the communication between both chambers 5 and 6. The fluid of the auxiliary chamber 6 finds a path through the communication circuit to relieve the pressure P2 and begins to move to the main chamber 5, with the pressure P1 increasing and said pressure P2 reducing, so that said pressures P1 and P2 eventually balance each other. However, as the surface of the rod 2 on which the pressure P1 is exerted is larger than the surface of said rod 2 on which the pressure P2 is exerted, the resulting force that drives said rod to its rest position Pr is greater than the resulting force that pushes it towards its stop position Ps, thereby generating the movement of the rod 2 to said rest position Pr.

## Claims

1. Controlled-activation gas cylinder, comprising a hollow cylindrical body (1), a body base (4) that closes one of the ends of the cylindrical body (1), a rod (2) housed, at least partially, inside the cylindrical body (1), which is axially movable in relation to said body of the cylinder (1) from a rest position (Pr) to a stop position (Ps) and vice versa, a stopper (13) disposed on the end of the cylindrical body (1) opposite to that of the body base (4), a main chamber (5) inside the cylindrical body (1), delimited between said cylindrical body (1), the rod (2) and the body base (4), an auxiliary chamber (6) delimited between the cylindrical body (1), the stopper (13) and the rod (2), a communication circuit to communicate the main chamber (5) with the auxiliary chamber (6) through the rod (2), and closing means attached to the body base (4) and adapted to close the communication circuit when the rod (2) reaches the stop position (Ps), the closing means comprising a closing piece (7) disposed, at least partially, in the main chamber (5), so that when the rod (2) moves to its stop position (Ps), said movement causes the closing piece (7) to seal the communication circuit, the closing piece (7) comprising an extended part (70) arranged in the main chamber (5) and the communication circuit comprising a through-pipe (21 a), the extended part (70) being housed in the through-pipe (21a) to seal said communication circuit, **characterised in that** the closing piece (7) is joined without freedom of movement to the body base (4) and comprises a pipe (70a) in its interior to communicate the communication circuit with the main chamber (5), and the closing means comprise an additional closing piece (8) that is disposed between the closing piece (7) and the body base (4) and which seals the pipe (70a) of said closing piece (7), preventing the communication of the main chamber (5) with the communication circuit, the cylinder (100) comprising release means so that the additional closing piece (8) releases said pipe (70a), thereby opening the communication circuit.

2. Cylinder according to claim 1, wherein the release means comprise an intermediate chamber (10) delimited between the additional closing piece (8) and the closing piece (7), and a hole (11) communicated with the intermediate chamber (10) through which a fluid is pressure-injected into the interior of said intermediate chamber (10) to release the communication circuit, said injection causing the movement of the additional closing piece (8) that releases the hole (70a) of the closing piece (7).

3. Cylinder according to claim 2, comprising a space (10a) between the additional closing piece (8) and the body base (4) that corresponds with the path that said additional closing piece (8) takes when the fluid is pressure-injected into the intermediate chamber (10).

4. Cylinder according to any of claims 2 or 3, comprising at least one spring (9) fixed to the additional closing piece (8) at one end and to the body base (4) at the other end, to cause said additional closing piece (8) to close the pipe (70a) of the closing piece (7).

5. Cylinder according to any of the preceding claims, wherein the main chamber (5) comprises a gaseous fluid and an oily fluid in its interior when the rod (2) is in the rest position (Pr), it comprising only oily fluid when said rod (2) is in the stop position (Ps).

6. Cylinder according to any of the preceding claims, wherein the rod (2) comprises a support piece (23) in its interior that is axially movable in relation to said rod (2), the support piece (23) passing through at least part of the communication circuit, and the closing means causing the axial movement of said support piece (23) in relation to the rod (2) when they come into contact with said support piece (23).

7. Cylinder according to claim 6, wherein the rod (2) comprises an internal surface (22) where the support piece (23) is supported, preventing the axial movement of said support piece (23) in relation to said rod (2) in one of the directions.

8. Cylinder according to claim 7, comprising a rod spring (24) fixed at one end to the rod (2) and at the other end to the support piece (23), which pushes the support piece (23) towards the internal surface (22).

## Patentansprüche

1. Gaszylinder mit kontrollierter Aktivierung, der einen zylindrischen Hohlkörper (1), eine Körperbasis (4), die eines der Enden des zylindrischen Körpers (1) schließt, eine Stange (2), die zumindest teilweise innerhalb des zylindrischen Körpers (1) aufgenommen ist, die in Bezug auf den Körper des Zylinders (1) von einer Ruheposition (Pr) in eine Anschlagposition (Ps) und umgekehrt axial bewegbar ist, einen Anschlag (13), der am Ende des zylindrischen Körpers (1) gegenüber jenem der Körperbasis (4) angeordnet ist, eine Hauptkammer (5) innerhalb des zylindrischen Körpers (1), die zwischen dem zylindrischen Körper (1), der Stange (2) und der Körperbasis (4) begrenzt ist, eine Hilfskammer (6), die zwischen dem zylindrischen Körper (1), dem Anschlag (13) und der Stange (2) begrenzt ist, einen Kommunikationsschaltkreis, um die Hauptkammer (5) über die Stange (2) mit der Hilfskammer (6) zu verbinden, und ein Schließmittel umfasst, das an die Körperbasis (4) angehaftet und so ausgelegt ist, dass es den Kommunikationsschaltkreis schließt, wenn die Stange (2) die Anschlagposition (Ps) erreicht, wobei das Schließmittel ein Schließstück (7) umfasst, das zumindest teilweise in der Hauptkammer (5) angeordnet ist, so dass, wenn sich die Stange (2) in ihre Anschlagposition (Ps) bewegt, die Bewegung bewirkt, dass das Schließstück (7) den Kommunikationsschaltkreis versiegelt, wobei das Schließstück (7) einen erweiterten Teil (70) umfasst, der in der Hauptkammer (5) angeordnet ist, und wobei der Kommunikationsschaltkreis ein Durchgangsrohr (21 a) umfasst, wobei der erweiterte Teil (70) im Durchgangsrohr (21 a) aufgenommen ist, um den Kommunikationsschaltkreis zu versiegeln, **dadurch gekennzeichnet, dass** das Schließstück (7) ohne Bewegungsfreiheit mit der Körperbasis (4) verbunden ist und ein Rohr (70a) in seinem Inneren umfasst, um den Kommunikationsschaltkreis mit der Hauptkammer (5) zu verbinden, und das Schließmittel ein weiteres Schließstück (8) umfasst, das zwischen dem Schießstück (7) und der Körperbasis (4) angeordnet ist und das Rohr (70a) des Schließstücks (7) versiegelt, wodurch die Kommunikation der Hauptkammer (5) mit dem Kommunikationsschaltkreis verhindert wird, wobei der Zylinder (100) ein Freigabemittel umfasst, so dass das weitere Schließstück (8) das Rohr (70a) freigibt, wodurch der Kommunikationsschaltkreis geöffnet wird.

2. Zylinder nach Anspruch 1, wobei das Freigabemittel eine Zwischenkammer (10), die zwischen dem weiteren Schließstück (8) und dem Schließstück (7) begrenzt ist, und ein Loch (11) umfasst, das mit der Zwischenkammer (10) in Verbindung steht, durch das ein Fluid in das Innere der Zwischenkammer (10) druckinjiziert wird, um den Kommunikationsschaltkreis freizugeben, wobei die Injektion die Bewegung des weiteren Schließstücks (8) bewirkt, die das Loch (70a) des Schließstücks (7) freigibt.

3. Zylinder nach Anspruch 2, der einen Raum (10a) zwischen dem weiteren Schließstück (8) und der Körperbasis (4) umfasst, der dem Weg entspricht, den das weitere Schließstück (8) nimmt, wenn das Fluid in die Zwischenkammer (10) druckinjiziert wird.

4. Zylinder nach einem der Ansprüche 2 oder 3, der zumindest eine Feder (9) umfasst, die an einem Ende an dem weiteren Schließstück (8) und am anderen Ende an der Körperbasis (4) befestigt ist, um zu bewirken, dass das weitere Schließstück (8) das Rohr (70a) des Schließstücks (7) schließt.

5. Zylinder nach einem der vorstehenden Ansprüche, wobei die Hauptkammer (5) ein gasförmiges Fluid und ein öliges Fluid in ihrem Inneren umfasst, wenn die Stange (2) in der Ruheposition (Pr) ist, wobei sie nur öliges Fluid umfasst, wenn sich die Stange (2) in der Anschlagposition (Ps) befindet.

6. Zylinder nach einem der vorstehenden Ansprüche, wobei die Stange (2) ein Stützelement (23) in ihrem Inneren umfasst, das in Bezug auf die Stange (2) axial bewegbar ist, wobei das Stützelement (23) zumindest einen Teil des Kommunikationsschaltkreises passiert, und wobei das Schließmittel die axiale Bewegung des Stützelements (23) in Bezug auf die Stange (2) bewirkt, wenn es mit dem Stützelement (23) in Kontakt gelangt.

7. Zylinder nach Anspruch 6, wobei die Stange (2) eine Innenfläche (22) umfasst, wo das Stützelement (23) getragen wird, wodurch die axiale Bewegung des Stützelements (23) in Bezug auf die Stange (2) in eine der Richtungen verhindert wird.

8. Zylinder nach Anspruch 7, der eine Stangenfeder (24) umfasst, die an einem Ende an der Stange (2) und am anderen Ende am Stützelement (23) befestigt ist, die das Stützelement (23) hin zur Innenfläche (22) stößt.

## Revendications

1. Cylindre à gaz à activation contrôlée, comprenant un corps cylindrique creux (1), une base de corps (4) qui ferme l'une des extrémités du corps cylindrique (1), une tige (2) logée, au moins partiellement, à l'intérieur du corps cylindrique (1), qui est axialement mobile par rapport audit corps du cylindre (1), d'une position de repos (Pr) à une position d'arrêt (Ps) et vice versa, une butée (13) disposée sur l'extrémité du corps cylindrique (1) opposée à celle de la base de corps (4), une chambre principale (5) à l'intérieur du corps cylindrique (1), délimitée entre ledit corps cylindrique (1), la tige (2) et la base de corps (4), une chambre auxiliaire (6) délimitée entre le corps cylindrique (1), la butée (13) et la tige (2), un circuit de communication pour faire communiquer la chambre principale (5) avec la chambre auxiliaire (6) par le biais la tige (2), et des moyens de fermeture fixés à la base de corps (4) et adaptés pour fermer le circuit de communication, lorsque la tige (2) atteint la position d'arrêt (Ps), les moyens de fermeture comprenant une pièce de fermeture (7) disposée, au moins partiellement, dans la chambre principale (5), de sorte que lorsque la tige (2) se déplace jusqu'à sa position d'arrêt (Ps), ledit mouvement amène la pièce de fermeture (7) à fermer hermétiquement le circuit de communication, la pièce de fermeture (7) comprenant une partie étendue (70) agencée dans la chambre principale (5) et le circuit de communication comprenant un tuyau débouchant (21 a), la partie étendue (70) étant logée dans le tuyau débouchant (21 a) pour fermer hermétiquement ledit circuit de communication, **caractérisé en ce que** la pièce de fermeture (7) est assemblée sans liberté de mouvement à la base de corps (4) et comprend un tuyau (70a) dans son intérieur pour faire communiquer le circuit de communication avec la chambre principale (5), et les moyens de fermeture comprennent une pièce de fermeture supplémentaire (8) qui est disposée entre la pièce de fermeture (7) et la base de corps (4) et qui ferme hermétiquement le tuyau (70a) de ladite pièce de fermeture (7), empêchant la communication de la chambre principale (5) avec le circuit de communication, le cylindre (100) comprenant des moyens de libération de sorte que la pièce de fermeture supplémentaire (8) libère ledit tuyau (70a), ouvrant ainsi le circuit de communication.

2. Cylindre selon la revendication 1, dans lequel les moyens de libération comprennent une chambre intermédiaire (10) délimitée entre la pièce de fermeture supplémentaire (8) et la pièce de fermeture (7), et un trou (11) qui communique avec la chambre intermédiaire (10), par le biais duquel un fluide est injecté sous pression dans l'intérieur de ladite chambre intermédiaire (10) pour libérer le circuit de communication, ladite injection provoquant le mouvement de la pièce de fermeture supplémentaire (8) qui libère le trou (70a) de la pièce de fermeture (7).

3. Cylindre selon la revendication 2, comprenant un espace (10a) entre la pièce de fermeture supplémentaire (8) et le corps de base (4) qui correspond avec la trajectoire que ladite pièce de fermeture supplémentaire (8) emprunte lorsque le fluide est injecté sous pression dans la chambre intermédiaire (10).

4. Cylindre selon l'une quelconque des revendications 2 ou 3, comprenant au moins un ressort (9) fixé à la pièce de fermeture supplémentaire (8) au niveau d'une extrémité et à la base de corps (4) au niveau de l'autre extrémité, pour amener ladite pièce de fermeture supplémentaire (8) à fermer le tuyau (70a) de la pièce supplémentaire (7).

5. Cylindre selon l'une quelconque des revendications précédentes, dans lequel la chambre principale (5) comprend un fluide gazeux et un fluide huileux dans son intérieur lorsque la tige (2) est dans la position de repos (Pr), mais ne comprenant que le fluide huileux lorsque ladite tige (2) est dans la position d'arrêt (Ps).

6. Cylindre selon l'une quelconque des revendications précédentes, dans lequel la tige (2) comprend une pièce de support (23) dans son intérieur qui est axialement mobile par rapport à ladite tige (2), la pièce de support (23) passant par au moins une partie du circuit de communication, et les moyens de fermeture provoquant le mouvement axial de ladite pièce de support (23) par rapport à la tige (2) lorsqu'ils viennent en contact avec ladite pièce de support (23).

7. Cylindre selon la revendication 6, dans lequel la tige (2) comprend une surface interne (22) où la pièce de support (23) est supportée, empêchant le mouvement axial de ladite pièce de support (23) par rapport à ladite tige (2) dans l'une des directions.

8. Cylindre selon la revendication 7, comprenant un ressort de tige (24) fixé, au niveau d'une extrémité, à la tige (2) et au niveau de l'autre extrémité, à la pièce de support (23), qui pousse la pièce de support (23) vers la surface interne (22).
